(19) Europäisches Patentamt

European Patent Office

Office européen des brevets

(11) EP 0 889 388 A1

(12) EUROPEAN PATENT APPLICATION

(43) Date of publication:
07.01.1999 Bulletin 1999/01

(51) Int Cl.⁶: **G06F 3/023**

(21) Application number: **98304675.6**

(22) Date of filing: **12.06.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.06.1997 US 885565**

(71) Applicant: **INTERNATIONAL BUSINESS MACHINES CORPORATION**
**Armonk, NY 10504 (US)**

(72) Inventor: **Lu, Qi**
**San Jose, California 95136 (US)**

(74) Representative: **Litherland, David Peter**
**IBM United Kingdom Limited**
**Intellectual Property Department**
**Hursley Park**
**Winchester, Hampshire SO21 2JN (GB)**

(54) **Data input interface for data processing systems**

(57) A user interface is provided for facilitating text entry to a hand-held computer device such as a Personal Digital Assistant. A subset of characters of a character set or alphabet is initially displayed on a touch sensor display. Respective subsets of the remaining characters of the alphabet are associated with the displayed characters. The user, having a particular character in mind to enter, selects the displayed character associated with the subset containing the displayed character. That subset is then displayed, and the user selects the desired character. Since a relatively few characters are displayed at a time, user visibility is good and character selection by means of a stylus is easy. Preferably the initially displayed characters are evenly distributed through the alphabet. For instance, if the initially displayed A represents the subset including A through F, then the user, desiring to enter E, first selects A and then selects E when the subset A through F is displayed.

Memo Entry:

5

◄ a g m s y 0 ►

*FIG. 3*

EP 0 889 388 A1

## Description

The invention generally relates to the field of computer user interfaces. More specifically, the invention relates to interfaces for receiving handwritten data input. The invention has particular applicability to hand-held units such as Personal Digital Assistants.

The present invention addresses the problem of inaccuracy and inefficiency in stylus-based handwriting data input on small hand-held computers and Personal Digital Assistants (PDAs), such as the Apple "Newton" and the US Robotics "Pilot" products.

Since these products are intended to be hand-held and easily portable, they have been designed for small size. As a consequence, display real estate has been small enough that the user interface must take the display size into account.

Due to this limited screen display real estate, the most common form of data input on such products is handwriting. The user writes characters onto an input screen, using a stylus, and the unit employs automatic handwriting recognition.

There are two key, interrelated problems with such stylus-based data input mechanisms. The first is that they are error prone, and the second is that their handwriting recognition algorithms are resource-costly, in terms of memory and CPU cycles. According to usage studies, the error rate of stylus input based on handwriting recognition is often around 10%. As a result, users often have to repeatedly erase and re-try, until the unit correctly recognizes the handwriting. Retrying, causing multiple executions of the recognition algorithm, further increases the total execution time.

Some systems have attempted to improve recognition by requiring the user to learn and use a special format of handwriting. One such special format is the "Graffiti Alphabet" used by the Pilot product. Issues relating to such handwriting recognition are given in Goldberg, D. and Goodisman, A., "Stylus User Interfaces for Manipulating Text," UIST Fourth Annual Symposium on User Interface Software and Technology, Nov, 1991.

The inaccuracy and inefficiency of stylus-based data input has become a critical issue in the wide acceptance of small hand-held computers. while not all of the criticism of the handwriting recognition performance of such products is fully deserved, there is a need for an improved user interface approach, which overcomes the problems of inaccuracy and excessive recognition time. Systems attempting to provide such improved performance must also accommodate the limited input screen real estate.

One possible alternative in the future is to use voice input based on the automatic speech recognition technologies. However, for the present, such systems are likely to suffer the same accuracy problem of automatic handwriting recognition. In addition, speech recognition systems are very expensive in terms of system resources such as special hardware devices, CPU and memory consumption. Thus, speech recognition technology, in its present form, does not appear to offer the user a better alternative to handwriting recognition.

Another approach is to use an actual, small-sized keyboard. The Microsoft windows CE platform provides an example of such a keyboard. Also, IBM Corporation's PC110 portable computer product has a small form factor user interface, including a reduced-size keyboard.

A more immediate approach is to provide an image of an actual small-sized keyboard on a display of a hand-held computer device. Several possible on-screen keyboard configurations are described in Quill, L.L, and Biers, D.W., "On-Screen Keyboards: Which Arrangements Should Be Used?" Proceedings of the 37th Annual Meeting of the Human Factors and Ergonomics Society, Vol. 2, Seattle, WA, Oct. 1993. Some more unconventional computer display menus, in the form of circular "pies," are given in Hopkins, D., et al., "Pies: Implementation, Evaluation, and Application of Circular Menus."

Although a displayed screen keyboard is an attractive alternative to handwriting systems, different implementations of screen keyboards have had drawbacks relating to the large amount of information content in a displayed keyboard.

Implementations in which a full-sized keyboard is displayed take up a large portion of the display screen just for the keyboard. Very little screen real estate is left for applications. Also, the large-sized display dramatically increases the cost of such computer devices.

Implementations in which a reduced-size keyboard is displayed provide keys which are too small to type using fingers. As a consequence, users must use a stylus, pen or some other hand-held instrument to touch the keyboard keys. This makes such devices very awkward to use.

Accordingly, the problem of how best to provide a user interface for text input on a small hand-held computer device remains to be solved.

It is therefore an object of the invention to provide a user interface, usable with a general purpose display (eg bit-array type) for a small computer device, which facilitates quick and accurate user text input.

It is a further object of the invention to provide a user interface for a small hand-held computer device which displays information on a touch-screen display, the information being large enough to be easily touch-selected by the user.

To achieve these and other objects, there is provided, in accordance with the invention, a computer user interface for facilitating entry of text information by a user to a computer device having a touch screen display. There is further provided a small computer apparatus, such as a portable, hand-held unit, incorporating such a user interface.

The user interface provided by the invention comprises the following components:

First, there is provided means for displaying, on the touch screen display, a first subset of characters from a character set, each character of the first subset having associated therewith a respective second subset of characters from the character set, each second subset including characters from the character set other than the characters of the first subset. Preferably, the first subset includes characters evenly spaced over the alphabet, such as A, G, M, S, Y, and the numeral 0. Also, the first subset is preferably displayed as large enough symbols to take full advantage of the screen real estate of the computer device. Even with a small, hand-held computer device, the display will be above to display this number of characters, roughly half a dozen, by means of symbols at least comparable in size to typewriter keys.

There is further provided first means for detecting user selection of one of the characters of the first subset. User selection is preferably done by touching the screen, either with fingertips or with a utensil such as a stylus.

There is further provided means, responsive to detection, by the first means for detecting, of user selection of one of the characters of the first subset, for displaying the respective second subset of characters associated with the selected character. In the above example, the respective second subsets include the subset B, C, D, E, and F associated with the index A; the subset H, I, J, K, and L associated with the index G; etc. Thus, again, the number of characters within the second subset associated with the selected character is small enough to allow for good-sized displayed symbols, even on a small computer device with a small display.

There is further provided second means for detecting user selection of one of the characters of the respective second subset. This second means is similar to the above-described first means.

Finally, the invention includes means, responsive to detection, by the second means for detecting, of user selection of one of the characters of the second subset, for treating the selected character of the second subset as input text information.

A user interface in accordance with the invention, or a computer apparatus incorporating such a user interface, is easy for a user to use because of the small number of characters displayed at any one time. This is true despite the small size of the display.

It is a noteworthy feature of this invention that a special layout arrangement of characters, specifically a multi-level layout, is used for the implementation of a screen keyboard. Accordingly, it is only necessary to use a small touch screen display in order to provide easy and efficient data input.

It is understood that a user, to take full advantage of the user interface of the invention, needs to have a comfortable knowledge of which characters of the respective second subset are associated with each of the characters of the first subset. This precondition is met if the indices and subsets are chosen according to some organizing principle, which the user can reasonably be expected to know. In the case of the Roman or Latin alphabet (used by English and most western languages), the organizing principle is preferably the well-known sequence of the letters of the alphabet. It is preferred that the subsets be characters in contiguous order within the alphabet. Thus, the user will have no trouble finding B within the A subset, because he/she will know that B comes after A but before G.

Accordingly, any Latin letter, digit, or other common keyboard symbol is entered by simply tapping on the screen using the stylus. The accuracy of input is dramatically improved, relative to handwriting recognition systems, because the entered data are chosen from a screen keyboard. Further, because of the improved performance of character selection via a keyboard/menu, users do not have to spend time correcting input errors and learning special input formats.

The efficiency of input is also improved, because each keyboard symbol can be entered with just a few taps. In preferred implementations, the Roman alphabet, numerals, and even a few common punctuation marks may commonly be entered using only two taps. However, within the spirit and scope of the invention, larger symbol sets may be accommodated using more taps.

It is expected that as many as three taps will only rarely be needed. However, it will be understood that the number of characters that can be selected is related to the number of characters per display, raised to the power of the number of taps. Therefore, with a manageably sized number of taps, larger character sets, such as Oriental character sets, may be used.

A preferred embodiment of the invention will now be described, by way of example only, with reference to the accompanying drawings in which:

FIG. 1 is a diagram showing tables of characters organized to show indexes in accordance with a preferred embodiment of the invention;

FIGs. 2, 3, 4, 5, 6, and 7 are illustrations of a display according to the invention, showing a sequence of steps used by a user to input characters as per the indexing scheme of FIG. 1;

FIGs. 8 and 9 show two arrangements of displayed characters on an apparatus according to alternative embodiments of the invention;

FIGs. 10, 11, and 12 are illustrations of a display according to the invention, showing an alternative sequence of steps used by a user to input characters;

FIG. 13 is an illustration of a device which is representative of an alternative class of embodiments of the invention;

FIGs. 14 and 15 are tree graphs illustrating a hierarchical arrangement of character indices and subsets for use with embodiments of the invention such as that of FIG. 13; and

FIG. 16 is an illustration of yet another embodiment of the invention.

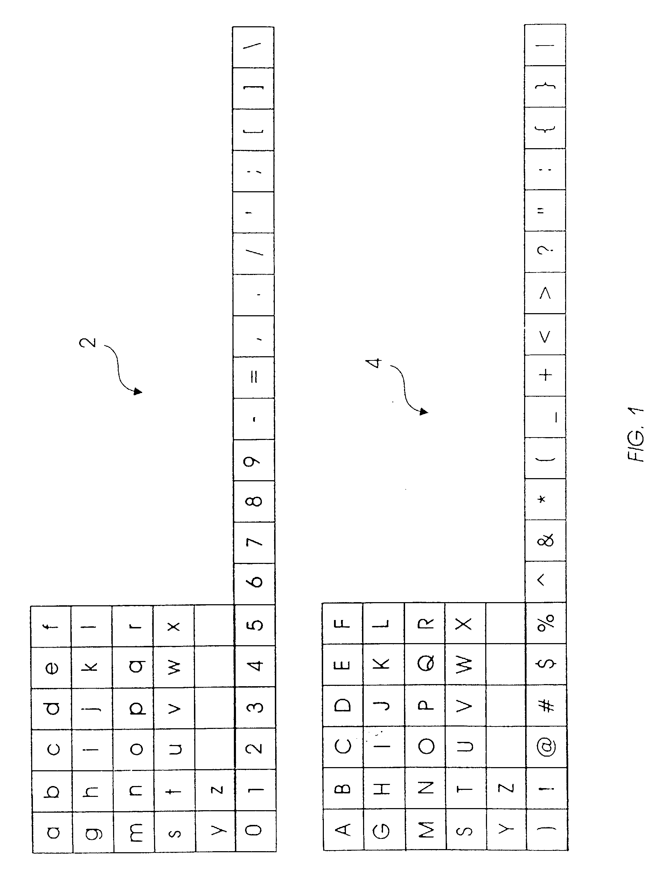

The multi-level keyboard layout employed in the present invention can be explained in terms of an example, which is also a preferred embodiment. The normal keyboard symbols, including alphabet, numerics, and standard punctuation marks, are arranged into two tables 2 and 4. The two tables 2 and 4 are shown in FIG. 1. Note, incidentally, that the second table 4 is simply a shift-pressed version of the first table 2. There preferably is a position on the display screen that serves as a toggle shift button for selecting upper case or lower case Latin letters.

On small, hand-held computer devices having small displays, it is infeasible to display the whole table 2 or 4 on the screen, so that each symbol can be selected and entered with just two taps, using a stylus.

However, in accordance with the invention, a trade-off is made between the number of taps needed for entering a symbol and the amount of display real estate. Specifically, the characters within the first (left-most) column of the table are treated as indices into the character set. The index is used to lead to the other symbols of the character set, shown in the rest of the table.

This screen keyboard layout is referred to as a "multi-level" keyboard layout because it essentially divides the entire set of input symbols into two levels. The index characters are referred to as a first, or higher, level subset of the full character set. Each of the index characters corresponds with a second level, or "lower" level, subset of the characters.

There are may possible ways of dividing the character set into the index subset and the different second-level subsets. It is deemed preferable to divide the characters into contiguous subsets, in terms of their order in the alphabet, the first character of each subset being the index character. That is, of course, the approach taken in the tables of FIG. 1. The advantage of this division scheme is that a user, seeking to enter text characters, will be familiar with the order of the alphabet, and will easily be able to tell between which two index characters a desired second-subset character falls

While two levels are deemed preferable for the character set shown, there is no inherent limitation on the number of levels. For instance, a three-level scheme could be used, in which a second subset, corresponding with a first-level index character, is divided into third-level (i.e., still lower level) subsets and respective second-level index characters.

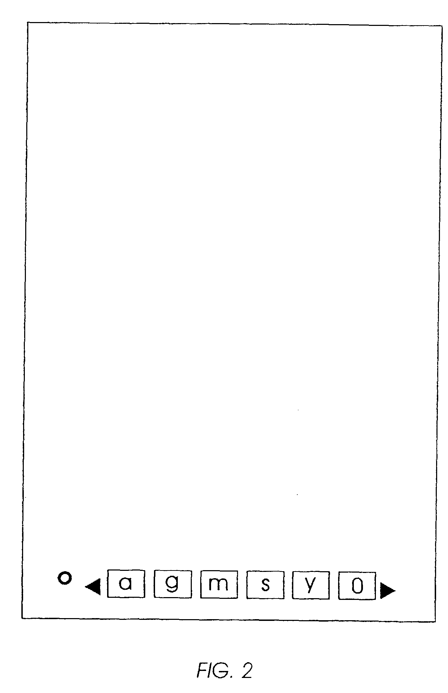

The initial layout of the screen keyboard only displays the subset of characters which are used as the index of the keyboard, as shown in FIG. 2.

To enter a given desired symbol, the user first selects an index symbol whose corresponding subset (i. e., row of the table of FIG. 1) contains the desired symbol. Selection is done, on a touch-screen display, using a fingertip, stylus, etc.

Responsive to the user's selection of an index character, the subset (i.e., row of the table of FIG. 1) which corresponds with the index character is displayed. It thus may be said that the user's selection of the index character causes the apparatus to display the second-level subset, "overriding" the originally displayed index characters. One of the characters of the second-level subset is (presumably) the user's desired character.

Then, the user selects the intended symbol, again by touching the touch-screen display. The character is then entered into the computer system.

Immediately after the selection is made, the keyboard display will be reset to its initial layout showing only the index symbols.

Note that the display preferably also includes a "back-up" user-selectable control. If the user accidentally touches the wrong index character, he/she may use the back-up control to return to the index character subset. Also, a time-out is preferably provided, so that, if the user fails to select a character from a second-level subset within a specified time, the system automatically returns to the top level index characters. In a preferred embodiment, a tap anywhere on the display outside of the keyboard area will reset the display to the initial state (index characters).

Moreover, where more than two levels of indexing are provided, the system preferably offers a choice of single-level backing up, such as from the third level back to the second level, and a direct return to the top level index characters.

An example of operation of the system according to the invention will now be given, with reference to FIGs. 2, 3, 4, 5, 6, and 7.

Suppose that a user wants to enter the phrase "conference call" into a device according to the invention. The first character to be entered is "c." The initially displayed index characters are as shown in FIG. 2. The user, being a literate person, knows that "c" occurs in the alphabet between the first index character "a" and the second index character "g."

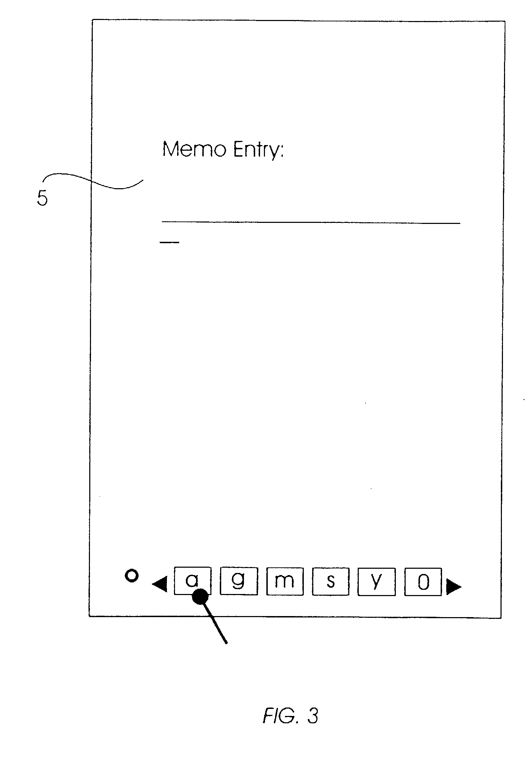

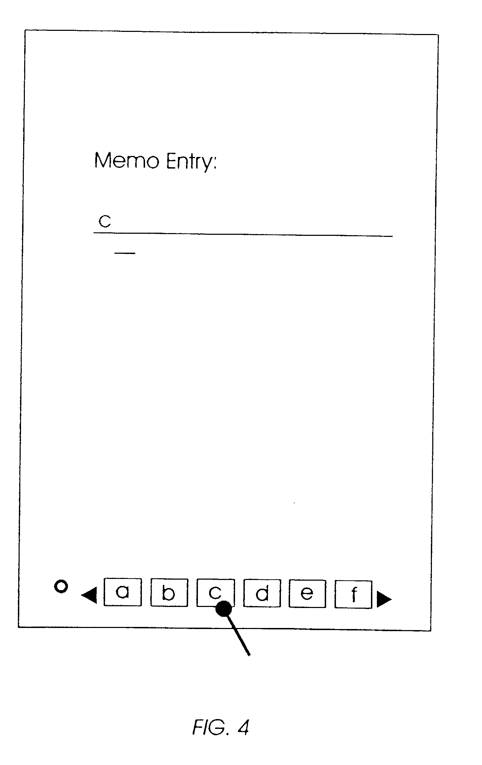

Therefore, from the initially displayed index characters shown in FIG. 2, the user selects "a" (FIG. 3). The selection of "a" causes the device to display the second-level subset shown in FIG. 4, the contiguous characters "a" through "f." The user then touches the position on the display where the letter "c" is displayed. The symbol "c" is correctly entered into a data entry field 5 of the display.

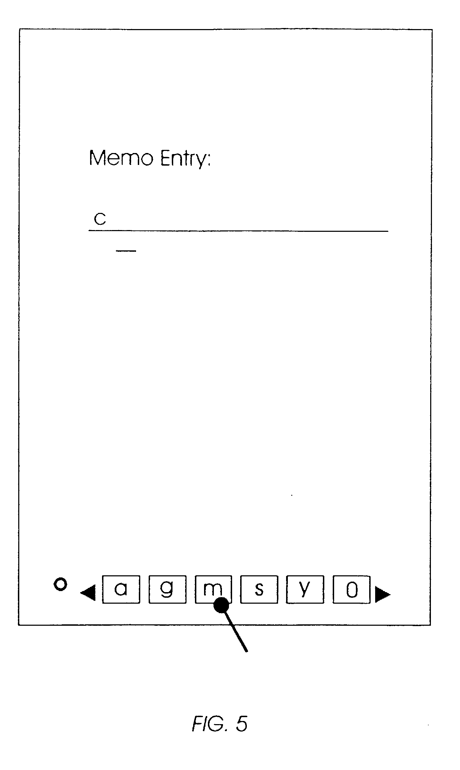

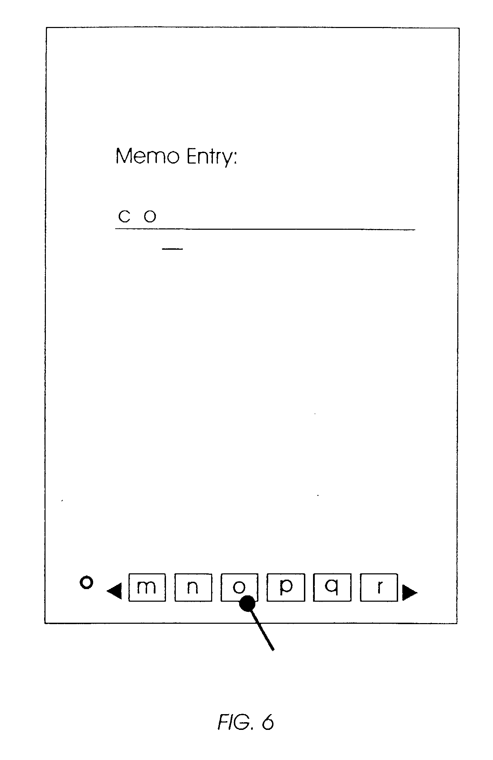

Following entry of the character, the screen keyboard returns to the display of the index characters (FIG. 5). The next desired character, "o," falls between the index characters "m" and "s." The user selects "m," and in response, the device displays the second-level subset associated with the index character "m" (FIG. 6). The user selects "o," and "o" is displayed in the data entry field.

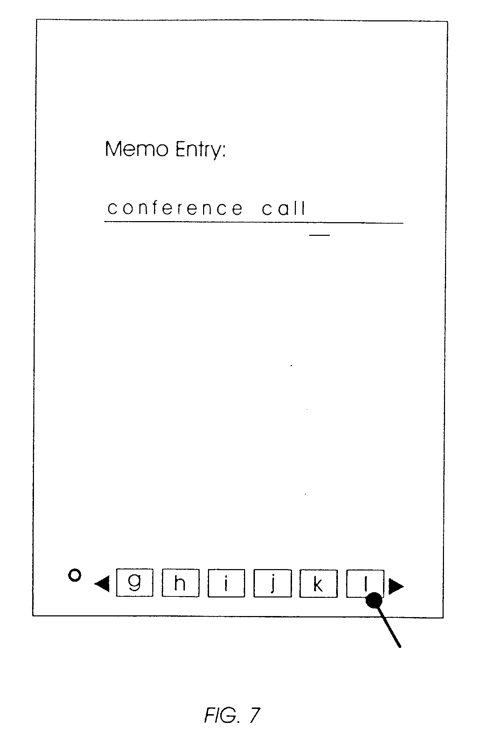

The data entry process proceeds in this fashion, until the entire phrase "conference call," concluding with an "l," is entered and shown in the data entry field (FIG. 7).

While the embodiment described in connection with FIGs. 1 through 7 is preferred, other embodiments, providing other character display information, may also be used in accordance with the invention.

For instance, when an index character is selected, the selected row need not necessarily "override" the original index symbols. Depending on the availability of extra display screen real estate, there can be different ways of arranging the appearance of a selected row.

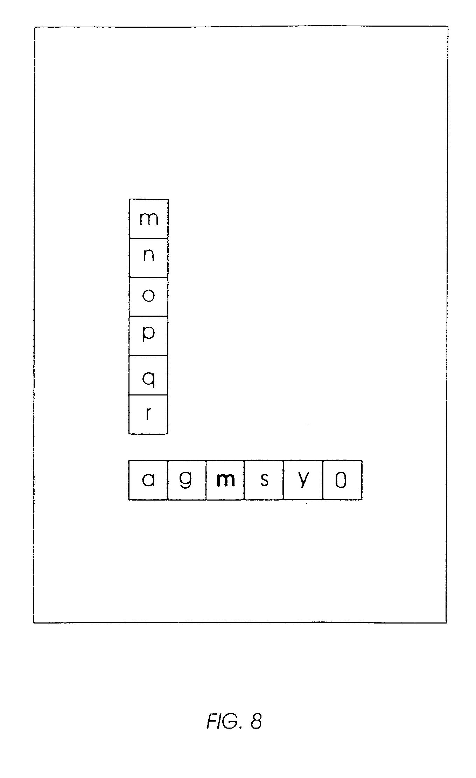

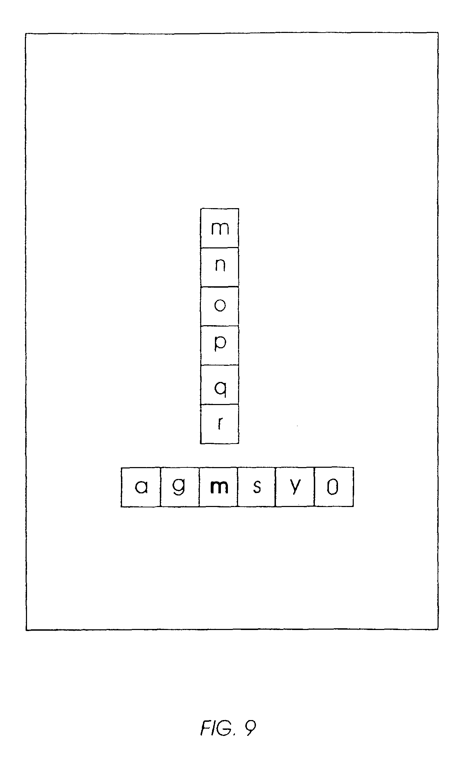

For example, when an index character is selected, the index characters may remain displayed, and the selected row of second-level subset characters can be displayed in addition to the index symbols. One possible configuration is to display the second-level subset of symbols orthogonally to the index symbols. See, for instance, FIG. 8. while the second-level subset characters of FIG. 9 are shown along one side of the display , they may alternatively be shown as adjacent to their index character, space permitting. See FIG. 9.

Alternatively, the specific layout of the multi-level screen keyboard can be made configurable so that it can be customized to adjust the user's specific needs.

Again, it is a noteworthy feature of the multi-level screen keyboard design, according to the invention, that the index characters and the subsets are chosen and displayed so as to rely on the literate user's ability to recognize the sequence intervals among the 26 Latin letters. Because of the assumption that this knowledge is already possessed by the user, there is no need for user training for understanding and use of an apparatus incorporating this input mechanism.

In preferred embodiments, any pair of Latin letters which are adjacent to each other within the subset of displayed index characters represents a range of Latin letters that falls in between the two, in the familiar ordered sequence of characters. Given any Latin letter that needs to be entered, any user will be able to quickly determine which range it falls into, between which two of the displayed index characters. The user then selects the correct index character, preferably the index character most closely preceding the desired character, to bring out the corresponding second-level subset row containing the desired letter.

In the preferred embodiment of FIG. 1, the last row in the original symbol table is different in length and content from the first five rows. That row contains the ten decimal digits, and other symbols (commonly used punctuation marks).

Because the digits have a natural sequence order among them, i.e., their numerical order, the digits may be dealt with in the same manner as the letters, described above.

However, the other symbols do not have a natural sequence which would presumptively be known to the user. (Of course, one possible ordering would be the numerical order of the ASCII codes for the other symbols. However, the great majority of possible users of a device according to the invention would not be familiar enough with the ASCII ordering for this to be useful.) As a consequence, the multi-level layout will not enable most users to quickly select the right index symbol to the get to the right subset containing the desired symbol.

This problem may be solved in a variety of ways.

One possible approach would be to limit the number of punctuation marks offered, so that all offered marks fit on the display together. This approach places an obvious, undesirable limitation on the user's ability to enter text containing a wider variety of marks. To offer an adequately large selection of punctuation marks, another possible approach would be to arbitrarily divide the punctuation marks into subsets, and accept the fact that the user will need to learn, probably by trial and error, which punctuation marks fall within which subsets.

However, in the preferred embodiment of FIG. 1, a different approach, which provides a wide selection of symbols on limited display space, is used. All of the punctuation marks available are bundled into one large row. In this preferred embodiment, the symbols are arranged in the layout similar to the most commonly available commercial keyboards.

In the illustrated embodiment, the punctuation marks and decimal digits are bundled together, and treated as per the following description. Alternatively, the punctuation marks may be in a bundle separate from the decimal digits. This latter separation of the decimal digits from the punctuation marks allows the decimal digits, which have a numerical order, to be treated the same way as the letters of the alphabet were treated (above).

When the index digit 0 is selected from the top-level index set (FIG. 2), the screen keyboard shows the following second-level subset characters:

    0    1    2    3    4    5

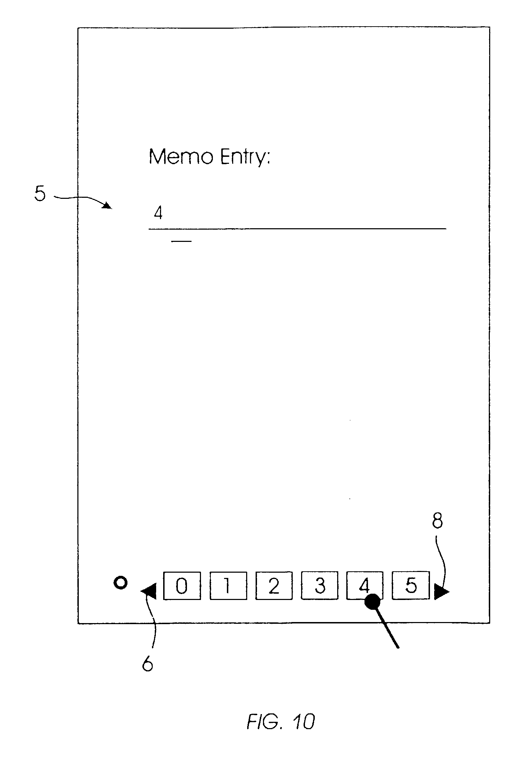

FIG. 10 is an illustration of a display screen of a hand-held computer device according to the invention, similar to those of FIGs. 2-9, showing these displayed digit symbols.

Referring back to the complete tabulation of characters given in FIG. 1, it will be seen that these symbols are only a portion of the total symbols making up the second-level subset associated with the index symbol "0."

Suppose the user desires to enter the two digits "48". The digit "4" is displayed at this point, and may be selected as described above. FIG. 10 illustrates the selection of the "4" digit and its appearance in the data entry field 5.

Next, the user desires to enter "8." The user knows that "8" is in the subset corresponding with the index "0" already selected. However, the above display information (FIG. 10) only shows a portion of the numerical sequence that does not include the desired "8."

To allow the user to easily observe the sequence of symbols in this row, and to rapidly reach and select the desired symbol, the preferred user interface/display keyboard design provides two positions on the screen keyboard which serve as sliding buttons for both directions. Referring again to FIG. 10, these slider buttons are preferably displayed on the screen in the form of arrow shapes: "←" and "→", designated by reference numerals 6 and 8 in FIG. 10, to indicate opposite scrolling or sliding directions.

Scrolling may be by the individual character, to give the user a better view of the sequence of symbols. Preferably, a user continuously touches a slider button, and the characters roll by, at a speed chosen so that the user can watch for the desired character, and release the slider button with a reaction time such that the desired symbol is still displayed after the symbol scrolling comes to a stop.

Alternatively, scrolling may be by symbol segments. That is, where six symbols at a time are displayed, and the first through sixth symbols are presently being displayed, then one tap of the right scroll symbol might cause the seventh through twelfth symbols of the row to be displayed.

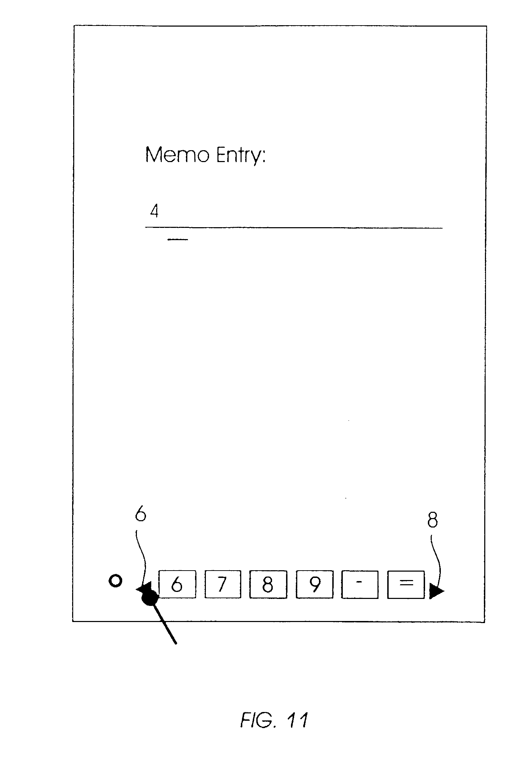

The latter scrolling arrangement is used in the present, illustrative embodiment. The user taps a sliding button. FIG. 11 illustrates a user tapping the sliding button 6. The subsequently displayed keyboard layout displays the following:

    6     7     8     9     -     =

These characters are now displayed in FIG. 11.

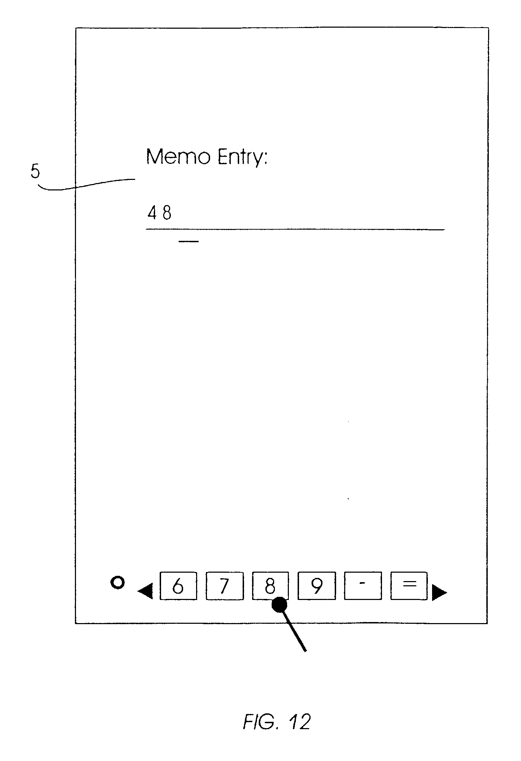

Reference is now made to FIG. 12. Then, as before, the user taps the position where the digit 8 is displayed, to enter the digit "8" into the date entry field 5.

It will be seen that this preferred embodiment may require more than two taps to enter a digit or a symbol. while this is admittedly a drawback, the drawback may be mitigated by arranging the punctuation marks in a sequence such that the symbols expected to be least frequently used are near the end of the last row. Thus, only in the relatively uncommon cases will the greater number of sliding taps be required.

Since most users will be primarily entering alphanumeric data, this layout will allow the user to enter most of the desired data with only two taps per symbol.

Persons skilled in the art will understand that the ideas of this invention can be applied more generally, in settings other than those discussed above. A few additional aspects of the invention, providing for such more general applications, will now be discussed.

## SOFTKEY USER INPUT

First, this invention can be used for other than touch- or stylus-based input. It can be also used with other input mechanisms. For example, an apparatus according to the invention may include a set of physical buttons, which serve as "softkeys" or function keys, comparable to the F1, F2, etc., keys on IBM-compatible computer keyboards. One such button corresponds with each of the entries displayed in the screen keyboard. The user then presses the appropriate button to make a selection.

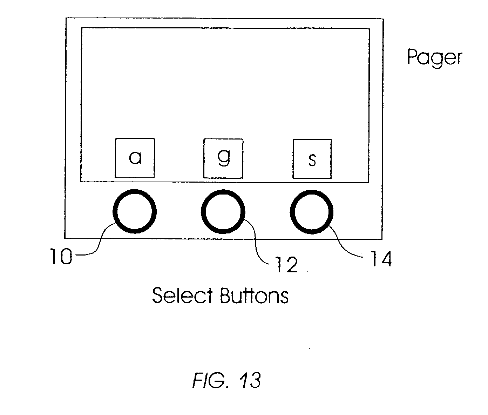

This "softkey" approach will work well on even smaller devices, such as a hand-held PDA or a pager. For instance, referring to FIG. 13, a pager may be implemented with three buttons 10, 12, and 14.

## CHARACTER SELECTION ON A HAND-HELD DEVICE BY MEANS OF THREE USER "SOFTKEY" BUTTONS

The following example illustrates how to use a three-entry screen keyboard, or a three-button pager such as that of FIG. 13, to enter any desired one of 26 Latin letters by means of three selections for each letter. Another example, which follows, shows how the invention may be practiced on a pager having only two buttons.

In general, the character set is partitioned, at a succession of levels, into a number of subsets equal to the number of available buttons. At each level, index characters, preferably the first character within each subset, are displayed. The user, again taking advantage of his/her knowledge of the organizing principle or order of the character set, selects character subsets by touching the button corresponding with the appropriate index character, within whose subset the desired character is to be found.

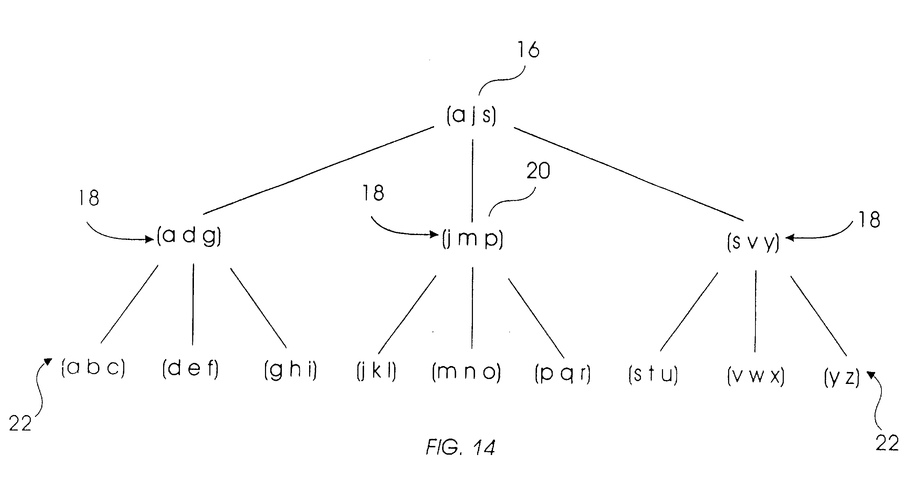

The hierarchy of indices and subsets may conveniently be illustrated in terms of a tree graph, as shown in FIG. 14. Successive branches of the tree, at successively lower levels, illustrate the increasingly smaller subsets of the character set. Also, each subset at each level may conveniently be represented by the set of index characters for that level and that subset. Taken in addition to the discussion given above, such tree graphs will illustrate the succession of index character choices provided to the user.

The user begins at a root node 16 of the tree (the top of the illustrated tree graph), and proceeds, one level at a time, through branch nodes at intermediate levels, to one of the leaf nodes (the bottom of the tree graph), where he/she selects the desired character. That character is then entered at the data entry field of the display, as described above.

At each node of the tree, the user is presented with a number of displayed characters equal to the number of buttons on the hand-held device. The user selects the appropriate index character by pressing the appropriate button. For the sake of the present discussion of the illustrated tree graphs, we will say that the user can press left, middle, and right buttons, corresponding with left-, middle-, and right-displayed index characters. The illustrated tree graphs show, at each node, ordered sets showing the index characters in left, middle, and right positions.

Referring to FIG. 14, the root node 16 (a, j, s) represents a division of the 26- character alphabet into three subsets of 9, 9, and 8 characters, respectively. The subsets are a-i, j-r, and s-z. The index characters, chosen as the first characters of each of the subsets, are a, j, and s.

Second level division, into second-level subsets, is shown in a middle level 18 of the tree graph. For instance, the nine-character subset j-r (shown as a node 20) is divided into three 3-character second-level subsets j-l, m-o, and p-r. The index characters for this second-level subset are j, m, and p.

Finally, at a third (lowest) level 22, the subsets include, at most, only three characters. Therefore, at the third level, the characters may be uniquely specified. This shows that three button presses on a three-button computer device are sufficient to select a character from the 26-character Latin alphabet.

Thus, for instance, if a user desired to enter a "p" character, he/she would do so by pressing (i) the middle button to select the subset j-r, (ii) the right button to select the second-level subset p-r, and finally (iii) the left button to select the "p" character.

## CHARACTER SELECTION ON A HAND-HELD DEVICE BY MEANS OF TWO USER "SOFTKEY" BUTTONS

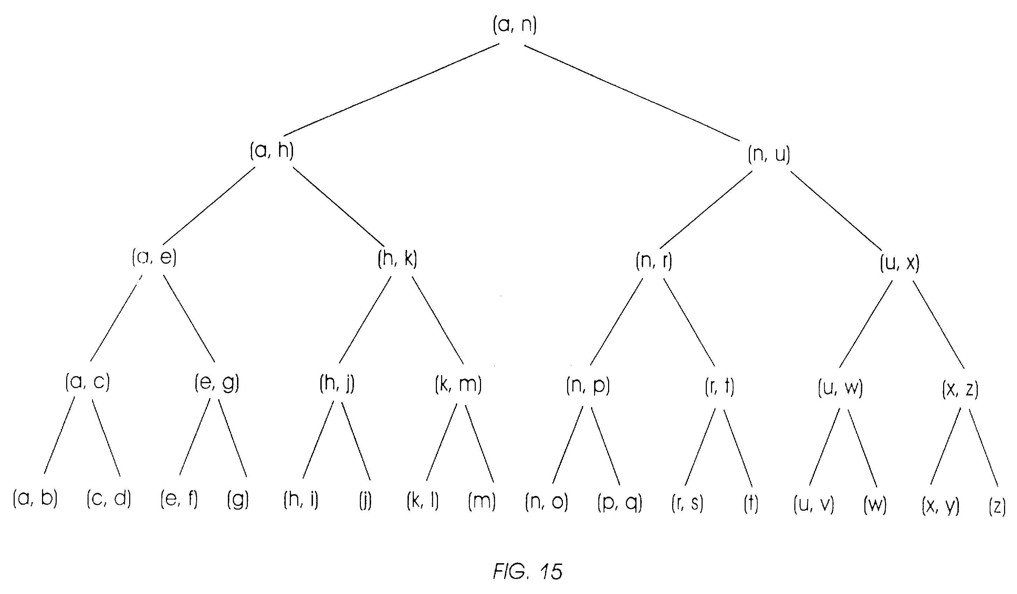

Let us next consider text selection on a computer device similar to that of FIG. 13, but instead having only two buttons. The tree graph for a suitable hierarchy of indices and subsets is given in FIG. 15. The root node (a, n) represents a division of the 26-character alphabet into two subsets of 13 characters each. The subsets are a-m and n-z. The index characters, chosen as the first characters of each of the subsets, are a and n.

Second level division, into second-level subsets, is shown in the middle level of the tree graph. For instance, the 13-character subset a-n is divided into two second-level subsets a-g and h-n. The index characters for this second-level subset are a and h.

Successive third and fourth levels of subsets are obtained similarly, as shown.

Finally, at the fifth (lowest) level, the subsets include, at most, only two characters. Therefore, at the fifth level, the characters may be uniquely specified. This shows that five button presses on a two-button computer device are sufficient to select a character from the 26-character Latin alphabet.

Thus, for instance, if a user desired to enter a "p" character, he/she would do so by pressing (i) the right button to select the subset n-z, (ii) the left button to select the second-level subset n-t, (iii) the left button to select the third-level subset n-q, (iv) the right button to select the fourth-level subset p-q, and finally (v) the left button to select the "p" character.

## A HAND-HELD DEVICE HAVING ONE SELECT BUTTON AND TWO SLIDER BUTTONS

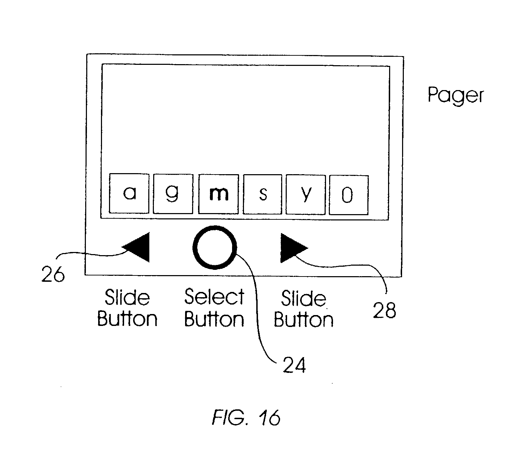

Still another embodiment of the invention is shown in FIG. 16. The illustrated device has three buttons which are configured as a single select button 24 and two slider buttons 26 and 28. The device is shown as displaying a set of six top-level index characters, as done in the earlier-described embodiments.

The device does not necessarily have a touch-screen display, so user input is made only through the buttons 24, 26, and 28. Note that, unlike the device of FIG. 13, this device displays more selectable symbols at a time than there are buttons. Therefore, the user cannot merely press the third button to select the third index symbol, as was done in connection with the description of FIGs. 13, 14, and 15.

In accordance with the invention, however, the shifting function, controllable by the slider buttons 26 and 28, are on a single symbol basis. The display highlights or otherwise indicates a single, currently selectable index symbol. In this case, the highlighting is indicated by displaying the index symbol "m" in boldface. Other techniques, such as color changing, enclosing the selectable symbol in a box, etc., may alternatively be used.

In operation, the user presses the slider buttons, as appropriate to cause the desired index character to be the currently selectable character, and then selects that character by pressing the select button 24. Then, lower level index subsets, or character subsets, are displayed.

Alternative embodiments, based on the principles just given, are also within the scope of the invention. For instance, a single scroll button may be provided, for scrolling the symbols in a single direction, circularly, so that after the last symbols are displayed, the first symbols are redisplayed. In such embodiments, the direction of scrolling may be left to the discretion of the designer.

Also, there may be more than one select button. For instance, if a device had five buttons, including two scroll buttons and three select buttons, then three symbols would be selectable at a time. The user uses the scroll buttons, as per FIG. 16, to shift the symbol subset until three contiguous symbols, including the desired symbol, were highlighted as being currently selectable. Then, the user presses whichever of the select buttons corresponds with the highlighted position of the desired symbol, as per FIG. 13.

## ALTERNATIVE SYMBOL SETS

Second, this invention can be applied to symbol sets other than the 26 Latin letters and the 10 digits. In fact, by using a greater number of levels, say, three or four, it is possible to accommodate a much larger character set.

The basic idea of the present invention may be applied to any symbol set, as long as the symbol set has a user-ascertainable order, or, more broadly, organizing principle, among its symbols. For example, the 50 symbols in the Japanese language can also be entered on a small computing device using a multi-level screen keyboard. An organizing principle can be used for the (huge) Chinese character set based on the organizing principle used by some Chinese-English dictionaries. Such dictionaries classify characters broadly based on the number of calligraphic strokes required to write the character, or on the occurrence of certain basic forms, or "radicals," within more complex characters.

Such large character sets may be implemented in a device according to the invention, by a suitable mix of levels of indexing and/or the above-described scrolling for relatively large subsets. Note, again, that as the number of levels increases, the number of characters that can be accommodated increases by the number of symbols per display raised to the power of the number of index levels. Thus, a huge character set can be accommodated by a relatively modest number of touch selections per character.

ANALYSIS OF NUMBER OF REQUIRED USER TOUCH ENTRIES FOR A GIVEN SIZE CHARACTER SET

Suppose that the ordered symbol set is designated S, and that the expression size(S) denotes the number of symbols in S. Suppose further that N is the number of entries to be displayed at one time in the screen keyboard.

Then, the invention can be used for any size character set S and for any number N of displayed entries. Further, it is easily shown that the invention allows any symbol to be entered with M user selections, where M is the smallest integer such that $N^M$ is larger than size(S). In other words, M is the log of size(S) on the base of N.

Thus, this invention provides a systematic way of doing design trade-offs between screen real estate and keystroke entry efficiency for small computer devices.

SELECTION OF INDICES WITHIN AN ORDERED CHARACTER SET

The specific process of creating the indices at different levels, in a preferred embodiment of the invention, will now be described. The description will include a rigorous presentation of the preferred embodiment, given in mathematical terms.

Consider a symbol set S, whose symbols are ordered, in a manner generally known to users of an apparatus according to the invention. A given symbol, the i-th symbol in the ordering scheme, will be expressed, in terms of its position in the ordering scheme, as S[i].

This, the index value i ranges in value from 0 to size(S) - 1.

The basic idea is to divide the symbols S[1], S[2], ....., S[size(S)] into N segments (preferably of substantially equal length), to pick one symbol of each segment, and to present the set of N picked symbols, in order, as the first (or top) level index.

The symbols picked from the segments are preferably the first symbols of each segment. Thus, the index symbols are distributed evenly through the symbol set's ordering.

If the symbol S[i] is selected as an index symbol, that symbol is also denoted as N[j]. Here, j is an index value for the index symbols of the first level index set. The index value j ranges in value from 0 to N - 1.

The N symbols in the first level index are selected as follows:

Let us define

$$K = \left\lceil \frac{size(S)}{N} \right\rceil \qquad (1)$$

If the total number size(S) of symbols happens to be a multiple of the number N of segments or subsets, then K is simply the number of symbols per segment, assuming equal division of the symbol set, and K will have an integral value.

If the total number size(S) of symbols is not a multiple of the number N of segments or subsets, then K will not have an integral value.

In equation (1), the brackets are "ceiling" symbols, and they mean that K's value is the smallest integer greater than or equal to the value of the expression within the "ceiling" symbols.

Given this definition of the variable K, the index symbols N[j] are selected from the total set of symbols S[i] as follows:

$$N[j] = S[(i-1)K+1] \qquad (2)$$

for (j = 0, 1, ..., N - 1). There will then be N second level indices.

The second level indices can be built by applying the same process. The first one of the second-level indices can be built as follows: First, equally divide the first- level subset corresponding with the first index, i.e., the subset including the symbols S[1], S[2], .... , S [K], into N segments. These N segments will make up the second-level subsets. Then, the first symbol in each of the second-level segments is taken as the second-level index character.

Other indices of the second level, and indices and subsets for deeper levels, can be built by the same process.

A software implementation of the invention, as described above, has been designed for a US Robotics Pilot platform. It is believed that comparable implementations can be realized in any of the other commercial hand-held computers currently supporting stylus-based data input.

This invention has the following key advantages over existing and possible future alternatives:

First, the invention offers a completely accurate way of data entry, using a stylus on a touch screen of a hand-held computer device. As soon as the user makes a choice by tapping a specific position on the screen keyboard, the chosen symbol is correctly entered into the system. Accuracy is guaranteed, as long as the user touches the correct symbol position on the touch-screen display. There is no handwriting interpretation error.

Second, the invention does not require that any unconventional additional hardware be included within a hand-held computer device. The invention may be implemented in a hand-held computer device having a conventional touch screen, and employing a conventional stylus.

Third, the invention makes use of the user's knowledge of natural intervals between normal sequencing of the 26 Latin letters. The invention makes no unnecessary cognitive or physical demands on the user, and requires no training or learning.

Fourth, the invention, embodied as per the above description, is efficient, because all alphabet characters and the most commonly used other symbols can be entered with only two taps on the touch screen. It is expected that efficiency improves as the user gains more experience and proficiency with such a hand-held device.

Fifth, the invention may be said to be resource-cost effective, in that a device embodying a user interface according to the invention only requires a very small area of screen real estate. Since conventional handwriting recognition-based input systems require a designated screen area for stylus writing, the invention makes no additional screen space requirement. The invention also eliminates any need for an automatic handwriting recognition system. Such software systems can often be very costly in terms of system memory and CPU processing power.

The invention may be implemented using standard programming and/or engineering techniques using computer programming software, firmware, hardware or any combination or subcombination thereof. Any such resulting program(s), having computer readable program code means, may be embodied or provided within one or more computer readable or usable media such as fixed (hard) drives, disk, diskettes, optical disks, magnetic tape, semiconductor memories such as read-only memory (ROM), etc., or any transmitting/receiving medium such as the Internet or other communication network or link, thereby making a computer program product, i.e., an article of manufacture, according to the invention. The article of manufacture containing the computer programming code may be made and/or used by executing the code directly from one medium, by copying the code from one medium to another medium, or by transmitting the code over a network.

An apparatus for making, using, or selling the invention may be one or more processing systems including, but not limited to, a central processing unit (CPU), memory, storage devices, communication links, communication devices, servers, I/O devices, or any subcomponents or individual parts of one or more processing systems, including software, firmware, hardware or any combination or subcombination thereof, which embody the invention as set forth in the claims.

User input may be received from the keyboard, mouse, pen, voice, touch screen, or any other means by which a human can input data to a computer, including through other programs such as application programs.

Thus it can be seen that the present invention is new and unique by virtue of a multi-level layout of the screen keyboard. This layout minimizes the screen real estate, while still allowing convenient and speedy data entry at the same time.

One skilled in the art of computer science will easily be able to combine the software created as described with appropriate general purpose or special purpose computer hardware to create a computer system and/or computer subcomponents embodying the invention and to create a computer system and/or computer subcomponents for carrying out the method of the invention. while the preferred embodiment of the present invention has been illustrated in detail, it should be apparent that modifications and adaptations to that embodiment may occur to one skilled in the art without departing from the scope of the present invention as set forth in the following claims.

**Claims**

1. A computer device comprising:

   first means for displaying a set of symbols representative of a character set, each displayed symbol having associated therewith a respective second subset of characters from the character set;

   first means for detecting user selection of one of the symbols;

   second means, responsive to detection, by the first means for detecting, of user selection of one of the symbols, for displaying the respective second subset of characters associated with the selected character;

   second means for detecting user selection of one of the characters of the respective second subset; and

means, responsive to detection, by the second means for detecting, of user selection of one of the characters of the second subset, for treating the selected character of the second subset as input text information.

2. A computer device as claimed in claim 1, wherein:

the computer device includes a touch-screen display, different symbols being displayed on respective regions of the touch-screen display; and

the first and second means for detecting user selection include means for detecting a physical contact of the touch-screen display on a region thereof which is displaying one of the symbols which is desired to be selected.

3. A computer device as claimed in claim 1, wherein:

the computer device includes a display and a set of user input buttons; and

the first and second means for detecting include means for detecting the user pressing one of the user input buttons.

4. A computer device as claimed in claim 3, wherein the character set is organized in a tree made up of nodes arranged in a succession of levels, each respective node (i) covering a respective subset of the characters of the character set, (ii) containing a number of index symbols equal to the number of user input buttons, (iii) being coupled to a number of other nodes at a next lower level of the tree, each of the other nodes covering a respective other subset of the characters of the symbol set, each of the other subsets including a number of characters less than or equal to the number of user input buttons, the other subsets together making up the respective subset.

5. A computer device as claimed in claim 3, wherein:

the user input buttons include a select button and a scroll button;

the first and second means for displaying include means for displaying a symbol in a highlighted form to indicate that the symbol is currently selectable, the currently selectable symbol changing responsive to user manipulation of the scroll button; and

responsive to user manipulation of the select button, the currently selectable symbol is selected.

6. A computer device as claimed in claim 1, wherein the means for displaying a set of index symbols includes means for displaying a first subset of the characters of the character set, each of the characters of the first subset being included within a respective one of the second subsets.

7. A computer device as claimed in claim 6, wherein the first means for displaying a set of symbols includes means for displaying a first subset of characters of the character set, the characters of the subset being selected based on an organizing principle of the characters of the character set.

8. A computer device as claimed in claim 7, wherein:

the organizing principle of the characters of the character set includes a predetermined order thereof;

in the means for displaying a first subset, the displayed subset of characters includes characters separated at substantially uniform intervals throughout the predetermined order of the character set; and

the respective subset of characters associated with a given one of the characters of the first subset includes a subset running consecutively from the given character to a next character of the first subset.

9. A method, for use with a user interface of a computer device, for facilitating entry of text information by a user to the computer device, the method comprising the steps of:

displaying a set of symbols representative of a character set, each displayed symbol having associated therewith a respective second subset of characters from the character set;

a first step of detecting user selection of one of the symbols;

responsive to operation of the first step of detecting, selecting one of the symbols, for displaying the respective second subset of characters associated with the selected character;

a second step of detecting user selection of one of the characters of the respective second subset;

responsive to operation of the second step of detecting, selecting one of the characters of the second subset; and

treating the selected character of the second subset as input text information.

EP 0 889 388 A1

| a | b | c | d | e | f |
|---|---|---|---|---|---|
| g | h | i | j | k | l |
| m | n | o | p | q | r |
| s | t | u | v | w | x |
| y | z |   |   |   |   |

| 0 | 1 | 2 | 3 | 4 | 5 | 6 | 7 | 8 | 9 | - | = | , | . | / | ' | ; | [ | ] | \ |
|---|---|---|---|---|---|---|---|---|---|---|---|---|---|---|---|---|---|---|---|

2

| A | B | C | D | E | F |
|---|---|---|---|---|---|
| G | H | I | J | K | L |
| M | N | O | P | Q | R |
| S | T | U | V | W | X |
| Y | Z |   |   |   |   |

| ) | ! | @ | # | $ | % | ^ | & | * | ( | _ | + | < | > | ? | " | : | { | } | | |
|---|---|---|---|---|---|---|---|---|---|---|---|---|---|---|---|---|---|---|---|

4

FIG. 1

FIG. 2

Memo Entry:

_____

—

5

○ ◄ [a] [g] [m] [s] [y] [0] ►

FIG. 3

Memo Entry:

c

○ ◄ [a] [b] [c] [d] [e] [f] ►

FIG. 4

Memo Entry:

c
—

◀ a g m s y 0 ▶   ○

*FIG. 5*

FIG. 6

Memo Entry:

conference call

FIG. 7

FIG. 8

FIG. 9

Memo Entry:

4 _____

FIG. 10

FIG. 11

Memo Entry:

5

4 8
___

○ ◄ | 6 | 7 | 8 | 9 | - | = | ►

*FIG. 12*

Pager

a    g    s

10    12    14

Select Buttons

*FIG. 13*

*FIG. 14*

EP 0 889 388 A1

EP 0 889 388 A1

FIG. 15

Pager

a g m s y 0

26

28

Slide
Button

Select
Button

Slide
Button

24

FIG. 16

**European Patent Office**

## EUROPEAN SEARCH REPORT

Application Number

EP 98 30 4675

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 313 207 A (HEWLETT PACKARD CO) 26 April 1989 * column 4, line 1 - line 18 * * column 5, line 2 - column 6, line 18 * | 1,3,4, 6-9 | G06F3/023 |
| Y | | 5 | |
| X | EP 0 733 964 A (XEROX CORP) 25 September 1996 * column 2, line 37 - column 4, line 24 * * column 5, line 58 - column 6, line 35 * | 1,2,9 | |
| Y | "CONSISTENT, EASY-TO-USE INTERFACE TO COST-REDUCED PANEL" IBM TECHNICAL DISCLOSURE BULLETIN, vol. 32, no. 10B, 1 March 1990, pages 408-411, XP000097934 * page 408 * | 5 | |
| A | JOHNSON B ET AL: "CYCLOPS A ONE BUTTON ALPHA-NUMERIC KEYPAD" MOTOROLA TECHNICAL DEVELOPMENTS, vol. 15, 1 May 1992, pages 49-56, XP000306143 * the whole document * | 1,5,9 | TECHNICAL FIELDS SEARCHED (Int.Cl.6) G06F |

The present search report has been drawn up for all claims

| Place of search | Date of completion of the search | Examiner |
|---|---|---|
| THE HAGUE | 19 October 1998 | Bailas, A |

EPO FORM 1503 03.82 (P04C01)